# EUROPEAN PATENT SPECIFICATION

(11) **EP 2 808 543 B1**
(45) Date of publication and mention of the grant of the patent: **01.11.2017**
(21) Application number: 13169451.5
(22) Date of filing: 28.05.2013
(51) Int. Cl.: F03D 80/00

(54) **De-humidifying system**
Entfeuchtungssystem
Système déshumidifiant

(43) Date of publication of application: 03.12.2014
(73) Proprietor: Siemens Aktiengesellschaft, 80333 München (DE)
(72) Inventor: Soerensen, Carsten Moeller, 7260 Sdr. Omme (DK)

(56) References cited:
- EP-A1- 2 568 169
- DE-A1-102008 053 814
- US-A1- 2010 117 362
- US-A1- 2010 308 596

## Description

The invention relates to a de-humidifying system of a wind turbine.

A wind turbine comprises a wind turbine rotor with rotor blades. The rotor is attached to the nacelle of the wind turbine. The nacelle is arranged on top of a tower.

Wind turbines are used on-shore or off-shore. On-shore wind turbines are often located close to a coast. In the off-shore area and close to a cost the humidity in the ambient air can be quite high.

Due to humidity in the ambient air and changing temperatures, humidity tends to condensate on cold surfaces in the wind turbine. Especially in the tower of the wind turbine the humility level can reach a level, where corrosion or mould can build inside the tower.

Such high humidity levels are unwanted, as the humidity is a problem for the electrical systems in the tower and for the tower itself.

It is therefore known to hinder water and moisture to get into the tower. In addition it is known to construct the tower in a way that reduces humidity in the tower by ventilation, for example natural ventilation or forced ventilation.

WO 1999/30031 A1 describes a wind power plant in which the generator is cooled by a cooling air flow generated by chimney effect in the tower of the wind power plant. A cabinet with power electronic is arranged in the lower part of the tower. The heat of the cabinet warms the air in the lower part of the tower. The warm air rises in the tower and fresh air is entering the tower in the lower area.

US 2010/0308596 A1 describes a door frame for a door of a tower of a wind turbine, said frame having a door opening that is preferably closed by a door leaf, and to a wind turbine having a tower, a door provided for entering the inside if the tower and a staircase leading to the door on the outside of the tower, preferably of a tower described above. The object lies in that the door frame has at least one air passage opening, particularly an air inlet opening.

This shows the disadvantage that air from outside the tower is flowing through the tower as long as the wind power plant is in operation.

EP 2568169 A1 describes a wind turbine comprising a tower, the tower having an upper part, a middle part and a lower part, the lower and the middle part of the tower forming the base of the tower, waste heat generating equipment located in the middle part of the tower, and a cooling device with at least one cooling device inlet formed in the tower for introducing outside air surrounding the tower into the tower, wherein the cooling device is adapted to guide the outside air from the or each cooling device inlet into the lower part of the tower such that the outside air can ascend towards the middle part and upper part of the tower while cooling the waste heat generating equipment, whereby the or each cooling device inlet is located in the upper part of the tower.

It is also known to install an arrangement in the tower to dehumidify the air in the tower. The de-humidifying arrangements work on the principle of condensation or absorption.

This shows the disadvantage that energy is needed to operate the de-humidifying systems.

The aim of the invention is therefore to provide an improved de-humidifying system for a wind turbine tower.

The object of the invention is achieved by the independent claim 1. Further features of the invention are disclosed in the dependant claims.

The tower comprises electrical arrangements, such as a transformer or a converter arrangement. Electrical arrangements emit waste heat. Waste heat is unwanted heat due to losses in the electrical arrangement.

The electrical arrangement is arranged within a chamber in the tower. The chamber separates the electrical arrangement from the rest of the tower. The chamber is ventilated and cooled by an air flow from the outside of the tower.
In a wind turbine tower de-humidifying system the tower comprises a chamber in its interior. The chamber comprises an electrical arrangement that emits waste heat.

A first tube connects the interior of the chamber to the exterior of the tower, to allow air from the exterior of the tower to flow into the chamber. A second tube connects the interior of the chamber to the exterior of the tower, to allow air from inside the chamber to flow to the exterior of the tower.

A valve is arranged in the second tube to open a passage between the second tube and the interior of the tower, to allow air from the chamber to flow into the tower.

The ambient air close to a wind turbine can show a high relative humidity due to a high level of humidity in the air combined with falling temperatures or due to rain.

Due to wind and changing air pressure humid air and rain comes into the tower. With falling temperatures, the humidity condensates and the moisture level increases inside the tower of the wind turbine.

High humidity levels in the tower are a problem for electrical systems and for the tower itself, and are therefore unwanted. The relative humidity in the tower can be reduced by blowing warm air into the tower.

A first tube connects the interior of the chamber to the exterior of the tower, to allow air from the exterior of the tower to flow into the chamber. A second tube connects the interior of the chamber to the exterior of the tower, to allow air from inside the chamber to flow to the exterior of the tower.

Thus air from the exterior of the tower flows through the first tube into the chamber and through the second tube to the outside of the tower. Thus the chamber is ventilated and excess heat is removed from the chamber.

A valve is arranged in the second tube to open a passage between the second tube and the interior of the tower, to allow air from the chamber to flow into the tower.

Thus excess heat from the electrical arrangement in the chamber is guided into the tower. Thus the interior of the tower is ventilated and heated. Thus the relative air humidity in the tower is reduced and the tower is ventilated. Thus the level of air moisture in the tower is lowered.

In addition a filter can be arranged in the flow-path of the heated air, especially in the passage where the warm air is entering the interior of the tower. Thus particles, like dust, sand or salt, are removed from the air and don't enter the interior of the tower.

The valve can be a mechanical valve that is pressure actuated or temperature actuated. Thus the valve acts on a mechanical basis and does not need an electrical control.

The first tube and the second tube are each connected to a through-hole in the tower wall.

Thus the air from outside tower can flow through the through-hole in the tower wall into the first tube and then into the chamber.

From the chamber, the air can flow through the second tube through the through-hole in the tower wall to the exterior of the tower.

A through-hole in the tower wall can easily be planned and arranged by cutting a hole in the tower wall or by preparing the part of the tower wall during fabrication. Thus the through-hole provides an easier access for the air into the tubes and the chamber.

The tower comprises a door, and a first tube and/or the second tube are connected to a through-hole in a door.

Thus the through-holes are arranged in the door and no additional through-holes through the tower wall are needed. Thus the tower wall is not weakened by the through-holes.

A first pressure sensor is arranged outside the tower and the second pressure sensor is arranged inside the tower.

The entry of moisture or rain into the tower can be avoided by keeping the tower interior at a higher pressure than the air pressure on the outside of the tower.

A ventilator is arranged in the first tube or in the second tube and can press air into the interior of the tower through the valve.

The pressure level inside of the tower can be controlled by the second pressure sensor and be compared to the pressure outside of the tower, measured by the first pressure sensor.

The valve is controlled in a way that the interior of the tower is kept at a higher pressure than the air pressure around the tower.

The first pressure sensor and the second pressure sensor are connected to a pressure control unit, and the pressure control unit comprises a connection to the valve. The pressure control unit controls the valve in dependency on the pressure measured by the sensors.

The first pressure sensor, measuring the air pressure at the outside of the tower, is connected to the control unit. The second pressure sensor, measuring the air pressure within the tower, is also connected to the control unit. The control unit is connected to the valve to control the valve.

Thus, the air pressures outside of the tower and inside the tower are measured and a pressure difference can be calculated. The valve is controlled according to the pressure difference to keep the interior of the tower at a higher pressure than the air outside of the tower.

A normal wind turbine tower is not air-tight. Air can move into the tower and out of the tower through minor gaps. Gaps are present for example between the tower and the nacelle of the wind turbine, from the tower into the nacelle of the wind turbine, or at the door of the tower.

Air is moving from the interior of the tower though the gaps to the outside of the tower when the interior of the tower is kept at a higher air pressure then the air surrounding the tower.

Thus air is moving from the inside of the tower to the outside of the tower, and the air outside of the tower is kept from moving into the tower interior.

Thus air with a high humidity is kept from flowing into the tower interior. Thus humidity is kept from the inside of the tower. Thus the moisture inside of the tower is kept on a low level.

A first moisture sensor is arranged outside the tower and a second moisture sensor is arranged inside the tower.

Thus the level of moisture and humidity outside of the tower can be measured and the level of moisture and humidity inside of the tower can be measured.

The first moisture sensor and the second moisture sensor are connected to a control unit. The moisture control unit comprises a connection to the valve. The moisture control unit controls the valve in dependency on the moisture measured by the sensors.

Thus the level of moisture and humidity outside of the tower and the level of moisture and humidity inside of the tower are measured, and the measuring values are compared by the control unit. Thus the valve is controlled in dependency on the difference of the moisture levels inside and outside of the tower.

Thus more hot air can be guided into the tower and the moisture level inside of the tower is higher than the moisture level on the outside of the tower. Thus the relative humidity inside of the tower can be reduced.

The chamber comprises a temperature sensor to measure the temperature of the air in the chamber and a temperature sensor is connected to the control unit.

The control unit is connected to the valve to control the valve. Thus the valve can be controlled in dependency on the temperature in the chamber.

The temperature in the chamber is low when the wind turbine is not in operation or during the start up of the wind turbine. Thus the valve can be controlled in a way to guide air into the interior of the tower, when the temperature in the chamber of the tower reaches a certain level.

Thus the heating and ventilation of the interior of the wind turbine tower is optimized.

The valve is a three-way valve that opens a passage to the interior of the tower while it blocks the passage of the second tube to the exterior of the tower.

Thus the air flowing through the second tube can be guided mainly completely into the interior of the tower. In addition, the pressure inside of the tower can be kept on a higher pressure level more easily.

A fan is installed in the first tube to force air to flow through the chamber and into the second tube.

Thus the ventilation of the chamber is optimized. In addition, the chamber and a second tube can be kept on a higher air pressure level.

A fan is installed in the second tube between the chamber and the valve, to suck air through the first tube and the chamber.

Thus the air flow is forced through the second tube. Thus the air is pressed into the second tube and is forced through the valve.

Thus the interior of the tower can be more easily kept on a higher pressure level than the air pressure surrounding the tower.

The electrical arrangement is a transformer and a chamber is explosion-tight.

A wind turbine comprises a transformer, and the transformer is often installed within the tower of the wind turbine. The transformer is installed in an explosion-tight transformer chamber.

A transformer generates a certain amount of waste heat. Thus the explosion-tight chamber needs to be cooled or ventilated. Thus the waste heat of the transformer can be used to lower the moisture level within the tower of the wind turbine.

The electrical arrangement comprises a converter.

A converter of a wind turbine produces a certain amount of waste heat. Thus the converter of a wind turbine needs to be ventilated or cooled.

The converter of the wind turbine can be easily ventilated or cooled when it is arranged within the chamber. In addition, the hot air can be used to lower the moisture level within the tower of the wind turbine.

The invention is shown in more detail by the help of figures. The figures show a preferred configuration and do not limit the scope of the invention.
FIG 1 shows a de-humidifying system,
FIG 2 shows a second embodiment of the de-humidifying system,
FIG 3 shows a first control of the dehumidifying system,
FIG 4 shows a second control of the de-humidifying system.

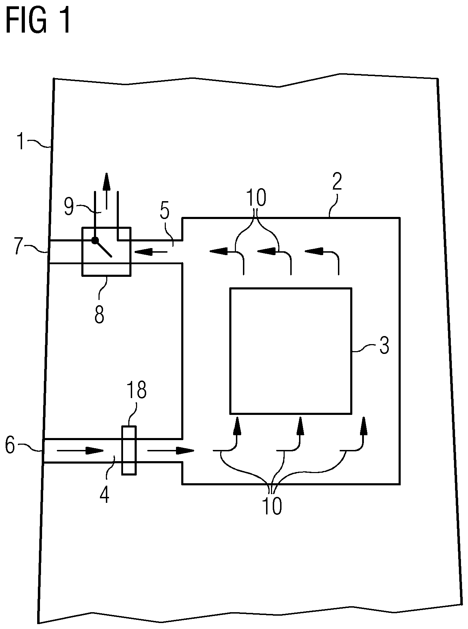

FIG 1 shows a de-humidifying system.

FIG 1 shows a dehumidifying system of a wind turbine tower. The tower 1 comprises a chamber 2 with an electrical arrangement 3 that emits waste heat. The electrical arrangement 3 is cooled by an air flow 10.

A first tube 4 connects the interior of the chamber 2 to the exterior of the tower 1. The first tube 4 is connected to a through-hole 6 in the wall of the tower 1. The first tube 4 allows air to flow from the outside of the tower 1 into the chamber 2.

A second tube 5 connects the interior of the chamber 2 to the exterior of the tower 1. The second tube 5 is connected to a through-hole 7 in the tower wall. The second tube 5 allows air to flow from the chamber 2 to the exterior of the tower 1.

The air 10 flows through the through-hole 6 and the first tube 4 into the chamber 2. In the chamber 2 the air gets warmed by the electrical arrangement 3. The warm air flows along the second tube 5 and through the through-hole 7 to the exterior of the tower 1. A fan 18 is arranged at the tube 4 to force the air 10 to flow through the chamber 2 and the second tube 5.

A valve 8 is arranged at the second tube 5. The valve can direct the air flow 10 in the second tube 5 through a passage 9 into the interior of the tower 1.

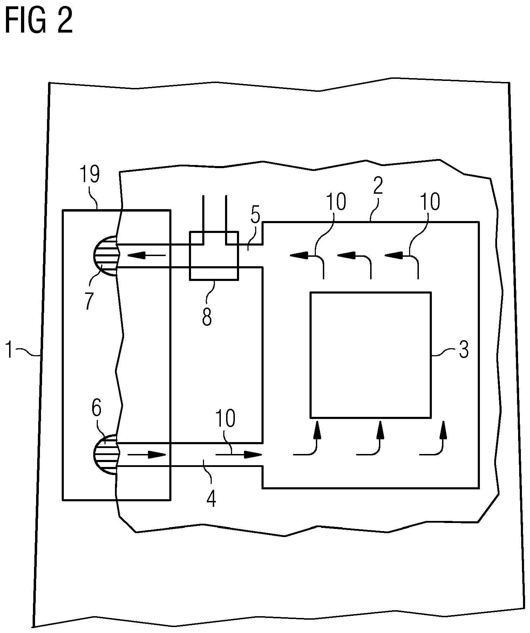

FIG 2 shows a second embodiment of the de-humidifying system

FIG 2 shows a de-humidifying system of a wind turbine tower 1. The tower 1 comprises a chamber 2 with an electrical arrangement 3. The tower 1 comprises a door 19.

The electrical arrangement 3 is cooled by an air flow 10. The air flow goes through the first tube 4, the chamber 2 and the second tube 5.

The first tube 4 and/or the second tube 5 are connected to the outside of the tower 1 by through-holes 6, 7. The through-holes 6, 7 are arranged in the door of the wind turbine tower.

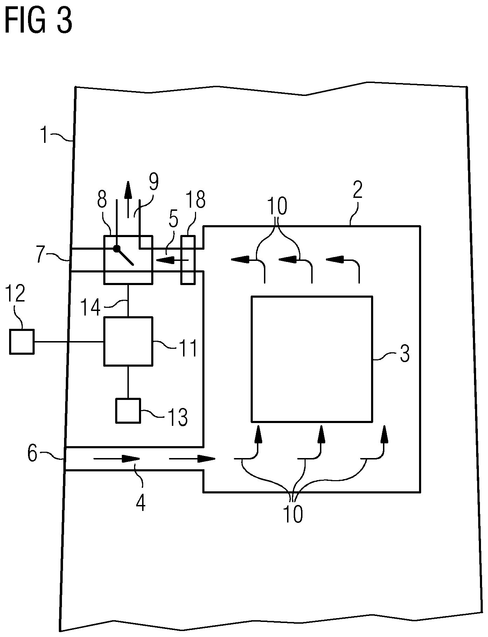

FIG 3 shows a first control of the dehumidifying system

FIG 3 shows a detail of the de-humidifying system.

A first pressure sensor 12 is arranged at the outside of the tower 1. The pressure sensor 12 measures the air pressure outside of the tower 1.

The air flows through the through-hole 6 and the first tube 4 in to the chamber 2. There it cools the electrical arrangement 3. The air 10 flows then through the fan 18 and the second tube 5. The fan 18 sucks the air through the first tube 4 and the chamber 2 and forces the air through the second tube 5.

A second pressure sensor 13 is arranged in the interior of the tower. The pressure sensor 13 measures the air pressure in the tower 1. The two pressure sensors 12, 13 are connected to a control unit 11. The control unit 11 controls the valve 8 through a connection 14.

The valve 8 can direct the air flow 10 through the passage 9 into the interior of the tower 1. Thus the tower 1 can be kept at a higher air pressure then the air surrounding the tower 1, by forcing warm air into the interior of the tower 1.

The higher pressure in the tower hinders air from the outside of the tower 1 to enter the tower 1 through any other opening in the tower 1. In addition the warm, dry air from the chamber 2 warms the tower 1 and lowers the humidity in the tower 1.

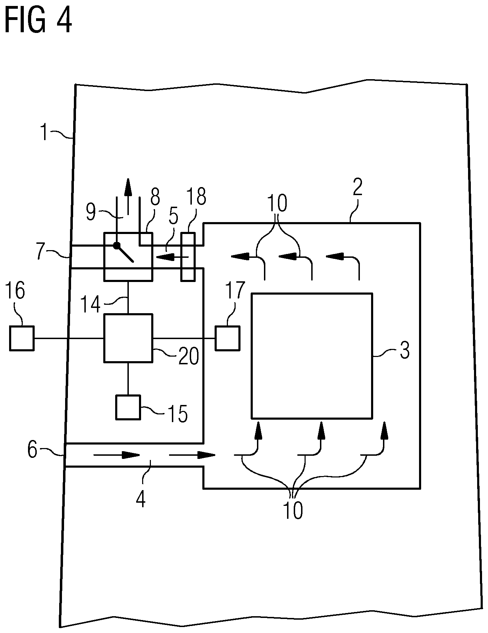

FIG 4 shows a second control of the de-humidifying system

FIG 4 shows another embodiment of a control of the dehumidifying system of the wind turbine tower 1.

A first moisture sensor 16 is arranged outside of the tower 1. A second moisture sensor 15 is arranged in the interior of the tower. The first moisture sensor 16 and the second moisture sensor 15 are connected to a moisture control unit 20. The moisture control unit 20 comprises a connection 14 to the valve 8. The moisture control unit 20 controls the valve 8 in relation to the measurement of the moisture sensors 15, 16.

The air flows through the through-hole 6 and the first tube 4 into the chamber 2. There it cools the electrical arrangement 3. The air 10 flows then through the fan 18 and the second tube 5. The fan 18 sucks the air through the first tube 4 and the chamber 2 and forces the air through the second tube 5.

The valve 8 can direct the air flow 10 through the passage 9 into the interior of the tower 1 or through the through-hole 7 in the wall of the tower 1.

In addition a temperature sensor 17 is arranged in the chamber 2 to measure the temperature of the air in the chamber 2.

Thus the moisture control unit 20 controls the valve 8 in dependency of the moisture measured by the moisture sensors 15, 16 outside and inside the tower 1 and in dependency of the temperature of the air in the chamber 2.

When the air flow 10 is directed through the passage 9 into the tower 1, the air flow through the through-hole 7 to the outside of the tower 1 is reduced. The valve can also block the second tube 5 so that the air flow 10 is mainly directed through the passage 9.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine tower,
- wherein the tower (1) comprises a chamber (2) in its interior,
- wherein the chamber (2) comprises an electrical arrangement (3) that emits waste heat, and the chamber separates the electrical arrangement from the rest of the tower,
- wherein the wind turbine tower comprises a dehumidifying system,
- wherein a first tube (4) connects the interior of the chamber (2) to the exterior of the tower (1), to allow air from the exterior of the tower (1) to flow into the chamber (2),
- wherein a second tube (5) connects the interior of the chamber (2) to the exterior of the tower (1), to allow air from inside the chamber (2) to flow to the exterior of the tower (1),
**characterized in that**
- a valve (8) is arranged in the second tube (5) to open a passage (9) between the second tube (5) and the interior of the tower (1) to allow air from the chamber (2) to flow into the tower (1).

2. Wind turbine tower according to claim 1, **characterized in that** the first tube (4) and the second tube (5) are each connected to a through-hole (6, 7) in the tower wall.

3. Wind turbine tower according to claim 1, **characterized in that** the tower (1) comprises a door (19) and the first tube (4) and/or the second tube (5) are connected to a through-hole (6, 7) in the door (19).

4. Wind turbine tower according to claim 1, **characterized in that** a first pressure sensor (12) is arranged outside the tower (1) and a second pressure sensor (13) is arranged inside the tower (1).

5. Wind turbine tower according to claim 4, **characterized in that** the first pressure sensor (12) and the second pressure sensor (13) are connected to a pressure control unit (11), and the pressure control unit (11) comprises a connection (14) to the valve (8), so that the pressure control unit (11) controls the valve (8) in dependency on the pressure measured by the sensors (12, 13).

6. Wind turbine tower according to claim 1, **characterized in that** a first moisture sensor (16) is arranged outside the tower (1) and a second moisture sensor (15) is arranged inside the tower (1).

7. Wind turbine tower according to claim 6, **characterized in that** the first moisture sensor (16) and the second moisture sensor (15) are connected to a moisture control unit (20), and the moisture control unit (20) comprises a connection (14) to the valve (8), so that the moisture control unit (20) controls the valve (8) in dependency on the moisture measured by the sensors (15, 16).

8. Wind turbine tower according to one of the claims 5 or 7, **characterized in that** the chamber (2) comprises a temperature sensor (17) to measure the temperature of the air in the chamber (2) and the temperature sensor (17) is connected to the control unit (11, 20).

9. Wind turbine tower according to one of the preceding claims, **characterized in that** the valve (8) is a three-way valve, that opens the passage (9) to the interior of the tower (1) while it blocks the passage of the second tube (5) to the exterior of the tower (1).

10. Wind turbine tower according to one of the preceding claims, **characterized in that** a fan (18) is installed in the first tube (4) to force air to flow through the chamber (2) and into the second tube (5).

11. Wind turbine tower according to one of the claims 1 to 8, **characterized in that** a fan (18) is installed in the second tube (5) between the chamber (2) and the valve (8), to suck air through the first tube (4) and the chamber (2).

12. Wind turbine tower according to one of the preceding claims, **characterized in that** the electrical arrangement (3) is a transformer and the chamber (2) is explosion tight.

13. Wind turbine tower according to one of the preceding claims, **characterized in that** the electrical arrangement (3) comprises a converter.

## Patentansprüche

1. Windturbinenturm,
- wobei der Turm (1) im Innenraum eine Kammer (2) umfasst,
- wobei die Kammer (2) eine elektrische Anordnung (3) umfasst, die Abwärme abgibt, und die Kammer die elektrische Anordnung vom Rest des Turms trennt,
- wobei der Windturbinenturm ein Entfeuchtungssystem umfasst,
- wobei ein erstes Rohr (4) den Innenraum der Kammer (2) mit der Außenseite des Turms (1) verbindet, damit Luft von der Außenseite des Turms (1) in die Kammer (2) strömen kann,
- wobei ein zweites Rohr (5) den Innenraum der Kammer (2) mit der Außenseite des Turms (1) verbindet, damit Luft aus der Kammer (2) zur Außenseite des Turms (1) strömen kann,
**dadurch gekennzeichnet, dass**
- in dem zweiten Rohr (5) ein Ventil (8) angeordnet ist, das einen Kanal (9) zwischen dem zweiten Rohr (5) und dem Innenraum des Turms (1) öffnet, damit Luft aus der Kammer (2) in den Turm (1) strömen kann.

2. Windturbinenturm nach Anspruch 1, **dadurch gekennzeichnet, dass** das erste Rohr (4) und das zweite Rohr (5) jeweils mit einem Durchgangsloch (6, 7) in der Turmwand verbunden sind.

3. Windturbinenturm nach Anspruch 1, **dadurch gekennzeichnet, dass** der Turm (1) eine Tür (19) umfasst und das erste Rohr (4) und/oder das zweite Rohr (5) mit einem Durchgangsloch (6, 7) in der Tür (19) verbunden sind.

4. Windturbinenturm nach Anspruch 1, **dadurch gekennzeichnet, dass** ein erster Drucksensor (12) außerhalb des Turms (1) und ein zweiter Drucksensor (13) innen im Turm (1) angeordnet ist.

5. Windturbinenturm nach Anspruch 4, **dadurch gekennzeichnet, dass** der erste Drucksensor (12) und der zweite Drucksensor (13) mit einer Druckregeleinheit (11) verbunden sind und die Druckregeleinheit (11) eine Verbindung (14) mit dem Ventil (8) umfasst, so dass die Druckregeleinheit (11) das Ventil (8) in Abhängigkeit von dem von den Sensoren (12, 13) gemessenen Druck betätigt.

6. Windturbinenturm nach Anspruch 1, **dadurch gekennzeichnet, dass** ein erster Feuchtigkeitssensor (16) außerhalb des Turms (1) und ein zweiter Feuchtigkeitssensor (15) innen im Turm (1) angeordnet ist.

7. Windturbinenturm nach Anspruch 6, **dadurch gekennzeichnet, dass** der erste Feuchtigkeitssensor (16) und der zweite Feuchtigkeitssensor (15) mit einer Feuchtigkeitsregeleinheit (20) verbunden sind und die Feuchtigkeitsregeleinheit (20) eine Verbindung (14) mit dem Ventil (8) umfasst, so dass die Feuchtigkeitsregeleinheit (20) das Ventil (8) in Abhängigkeit von der von den Sensoren (15, 16) gemessenen Feuchtigkeit betätigt.

8. Windturbinenturm nach einem der Ansprüche 5 und 7, **dadurch gekennzeichnet,**
**dass** die Kammer (2) einen Temperatursensor (17) zum Messen der Temperatur der Luft in der Kammer (2) umfasst und der Temperatursensor (17) mit der Regeleinheit (11, 20) verbunden ist.

9. Windturbinenturm nach einem der vorhergehenden Ansprüche, **dadurch gekennzeichnet,**
**dass** es sich bei dem Ventil (8) um ein Dreiwegeventil handelt, das den Kanal (9) zum Innenraum des Turms (1) öffnet und dabei den Kanal des zweiten Rohrs (5) zur Außenseite des Turms (1) versperrt.

10. Windturbinenturm nach einem der vorhergehenden Ansprüche, **dadurch gekennzeichnet,**
**dass** in dem ersten Rohr (4) ein Gebläse (18) installiert ist, das Luft durch die Kammer (2) in das zweite Rohr (5) strömen lässt.

11. Windturbinenturm nach einem der Ansprüche 1 bis 8, **dadurch gekennzeichnet,**
**dass** in dem zweiten Rohr (5) zwischen der Kammer (2) und dem Ventil (8) ein Gebläse (18) installiert ist, das Luft durch das erste Rohr (4) und die Kammer (2) saugt.

12. Windturbinenturm nach einem der vorhergehenden Ansprüche, **dadurch gekennzeichnet,**
**dass** es sich bei der elektrischen Anordnung (3) um einen Transformator handelt und die Kammer (2) explosionsgeschützt ist.

13. Windturbinenturm nach einem der vorhergehenden Ansprüche, **dadurch gekennzeichnet,**
**dass** die elektrische Anordnung (3) einen Umrichter umfasst.

## Revendications

1. Tour éolienne,
- dans laquelle la tour (1) comprend une chambre (2) à l'intérieur de celle-ci,
- dans laquelle la chambre (2) comprend un agencement électrique (3) qui émet de la chaleur perdue, et la chambre sépare l'agencement électrique du reste de la tour,
- dans laquelle la tour éolienne comprend un système déshumidifiant,
- dans laquelle un premier tube (4) relie l'intérieur de la chambre (2) à l'extérieur de la tour (1), pour permettre à l'air venant de l'extérieur de la tour (1) de circuler dans la chambre (2),
- dans laquelle un second tube (5) relie l'intérieur de la chambre (2) à l'extérieur de la tour (1), pour permettre à l'air venant de l'intérieur de la chambre (2) de circuler à l'extérieur de la tour (1),
**caractérisée en ce que**
- une soupape (8) est agencée dans le second tube (5) pour ouvrir un passage (9) entre le second tube (5) et l'intérieur de la tour (1) pour permettre à l'air venant de la chambre (2) de circuler dans la tour (1).

2. Tour éolienne selon la revendication 1, **caractérisée en ce que** le premier tube (4) et le second tube (5) sont reliés chacun à un trou traversant (6, 7) dans la paroi de la tour.

3. Tour éolienne selon la revendication 1, **caractérisée en ce que** la tour (1) comprend une porte (19) et le premier tube (4) et/ou le second tube (5) sont reliés à un trou traversant (6, 7) dans la porte (19).

4. Tour éolienne selon la revendication 1, **caractérisée en ce qu'**un premier capteur de pression (12) est agencé à l'extérieur de la tour (1) et un second capteur de pression (13) est agencé à l'intérieur de la tour (1).

5. Tour éolienne selon la revendication 4, **caractérisée en ce que** le premier capteur de pression (12) et le second capteur de pression (13) sont reliés à une unité de commande de pression (11), et l'unité de commande de pression (11) comprend une connexion (14) à la soupape (8), de sorte que l'unité de commande de pression (11) commande la soupape (8) en fonction de la pression mesurée par les capteurs (12, 13).

6. Tour éolienne selon la revendication 1, **caractérisée en ce qu'**un premier capteur d'humidité (16) est agencé à l'extérieur de la tour (1) et un second capteur d'humidité (15) est agencé à l'intérieur de la tour (1).

7. Tour éolienne selon la revendication 6, **caractérisée en ce que** le premier capteur d'humidité (16) et le second capteur d'humidité (15) sont reliés à une unité de contrôle d'humidité (20), et l'unité de contrôle d'humidité (20) comprend une connexion (14) à la soupape (8), de sorte que l'unité de contrôle d'humidité (20) contrôle la soupape (8) en fonction de l'humidité mesurée par les capteurs (15, 16).

8. Tour éolienne selon l'une des revendications 5 ou 7, **caractérisée en ce que** la chambre (2) comprend un capteur de température (17) pour mesurer la température de l'air dans la chambre (2) et le capteur de température (17) est relié à l'unité de contrôle (11, 20).

9. Tour éolienne selon l'une des revendications précédentes, **caractérisée en ce que** la soupape (8) est une soupape à trois voies, qui ouvre le passage (9) à l'intérieur de la tour (1) pendant qu'elle bloque le passage du second tube (5) à l'extérieur de la tour (1).

10. Tour éolienne selon l'une des revendications précédentes, **caractérisée en ce qu'**un ventilateur (18) est installé dans le premier tube (4) pour forcer l'air à circuler à travers la chambre (2) et dans le second tube (5).

11. Tour éolienne selon l'une des revendications 1 à 8, **caractérisée en ce qu'**un ventilateur (18) est installé dans le second tube (5) entre la chambre (2) et la soupape (8), pour aspirer l'air à travers le premier tube (4) et la chambre (2).

12. Tour éolienne selon l'une des revendications précédentes, **caractérisée en ce que** l'agencement électrique (3) est un transformateur et la chambre (2) est étanche aux explosions.

13. Tour éolienne selon l'une des revendications précédentes, **caractérisée en ce que** l'agencement électrique (3) comprend un convertisseur.
